# FASCICULE DE BREVET EUROPEEN

(11) **EP 4 003 814 B1**
(45) Date de publication et mention de la délivrance du brevet: **02.07.2025**
(21) Numéro de dépôt: 20737516.3
(22) Date de dépôt: 19.05.2020
(51) Int. Cl.: B62D 21/15, B62D 25/02, B62D 25/04, B62D 27/02

(54) **INSERT DE RIGIDIFICATION POUR UNE CAISSE DE VÉHICULE**
VERSTEIFUNGSEINSATZ FÜR EINE FAHRZEUGKAROSSERIE
STIFFENING INSERT FOR A VEHICLE BODY

(30) Priorité: 24.05.2019 FR 1905522
(43) Date de publication de la demande: 01.06.2022
(73) Titulaire: Stellantis Auto SAS, 78300 Poissy (FR)
(72) Inventeur: GROSSET, Romain, 94230 CACHAN (FR); CORNEFERT, Arnaud, 94240 L HAY LES ROSES (FR); SEVRIN, Alexandre, 91400 ORSAY (FR)
(74) Mandataire: BCIP
(86) Numéro de dépôt international: PCT/FR2020/050826
(87) Numéro de publication internationale: WO 2020/240114

(56) Documents cités:
- WO-A1-94/06669
- FR-A1- 2 933 059
- FR-A1- 2 934 230
- FR-A1- 3 024 414
- FR-B1- 2 932 146

## Description

### DOMAINE TECHNIQUE DE L'INVENTION

La présente invention se rapporte au domaine des caisses de véhicules automobiles et vise particulièrement un insert de rigidification pour un longeron intérieur avant de caisse de véhicule.

L'invention vise notamment à améliorer la sécurité des occupants d'un véhicule en cas de choc avant au moyen d'un tel insert de rigidification pour longeron intérieur avant d'une caisse de véhicule.

### ETAT DE LA TECHNIQUE

Comme cela est connu, la caisse d'un véhicule automobile doit respecter certaines normes en matière de déformation en cas de choc. A cette fin, la caisse d'un tel véhicule automobile comporte, de manière connue, différents dispositifs de rigidification, notamment sous la forme d'inserts de rigidification rapportés sur des longerons de la caisse, afin de renforcer certaines portions de ces longerons.

Le document FR 2932146 B1 décrit un exemple d'insert de rigidification pour caisse de véhicule automobile. Cet insert de rigidification, constitué de deux parties assemblées, ne permet cependant pas de rigidifier le pied avant d'un longeron intérieur avant d'une caisse de véhicule. Les documents WO94/06669, FR2933059 et FR2934230 décrivent des structures de véhicule comportant un renfort entre un longeron et un pied avant.

Or, en cas de choc à l'avant du véhicule, le pied avant, au niveau du coude suivi par le longeron intérieur avant, constitue une zone de faiblesse qui a tendance à effectuer une rotation vers l'intérieur du coude. Cela impacte l'espace de la caisse désigné « cellule de survie » et destiné à assurer un volume de survie pour les occupants du véhicule en cas de choc. En effet, la rotation du pied avant peut entraîner le glissement de la portière qui peut tourner et pénétrer ladite cellule de survie.

Il existe donc un besoin pour un insert de rigidification d'un longeron intérieur avant d'une caisse de véhicule qui soit configuré pour bloquer en rotation le pied avant en cas de choc longitudinal, en particulier de choc à l'avant du véhicule.

A cette fin, la présente invention concerne un insert de rigidification destiné à être intégré à un longeron intérieur avant de façon à couvrir, pour la renforcer, une portion du coude du pied avant dudit longeron intérieur avant.

### PRESENTATION DE L'INVENTION

Plus précisément, l'invention a pour objet un insert de rigidification pour caisse de véhicule, configuré pour épouser la forme d'une portion d'un pied avant formant un coude d'un longeron intérieur avant d'une caisse de véhicule, ledit longeron intérieur avant ayant un axe longitudinal en amont du pied avant, ledit coude prolongeant le longeron intérieur avant dans une direction orthogonale à l'axe longitudinal du longeron intérieur avant et orthogonale à la route, ledit insert de rigidification étant destiné à être fixé solidairement audit longeron intérieur avant de façon à recouvrir ledit coude, de sorte à verrouiller toute mobilité dudit longeron intérieur avant en rotation du pied avant, sur une portion correspondant audit coude, dans une direction orientée vers l'intérieur du coude, de façon à bloquer la rotation du pied avant en cas de choc à l'avant du véhicule. L'insert de rigidification est fixé audit longeron intérieur avant à la fois sur une portion du fond dudit longeron intérieur avant, correspondant à une surface s'étendant latéralement, sur un côté du longeron intérieur avant, dans un plan orthogonal à la route, et sur une portion d'un mur d'entrée de porte, correspondant à une surface s'étendant longitudinalement, sur un dessus du longeron intérieur avant, dans un plan parallèle à la route.

Avantageusement, ledit insert de rigidification est fixé par soudure audit longeron intérieur avant.

Avantageusement, ledit insert de rigidification est fixé audit longeron intérieur avant à la fois sur une portion du longeron intérieur avant située en amont du pied avant et sur une portion du coude du longeron intérieur avant.

Avantageusement, ledit insert de rigidification est une pièce d'un seul tenant.

Avantageusement, ledit insert de rigidification est une pièce unique emboutie.

La présente invention vise par ailleurs un longeron intérieur avant destiné à une caisse de véhicule automobile, comprenant un insert de rigidification tel que brièvement décrit ci-dessus.

La présente invention vise aussi une caisse de véhicule automobile comprenant un tel longeron intérieur avant, de chaque côté de la caisse du véhicule.

La présente invention vise également un véhicule automobile comprenant une caisse telle que brièvement décrite ci-dessus.

### PRESENTATION DES FIGURES

L'invention sera mieux comprise à la lecture de la description qui va suivre, donnée uniquement à titre d'exemple, et se référant au dessin annexé, donné à titre d'exemple non limitatif, sur lequel :

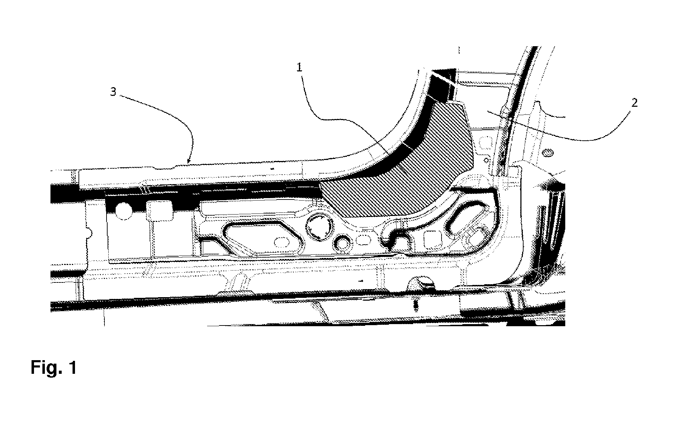

[Fig. 1] est une représentation schématique d'un insert de rigidification intégré à un longeron intérieur avant d'une caisse de véhicule, conformément à l'invention.

Il faut noter que la figure expose l'invention de manière détaillée pour mettre en œuvre l'invention, ladite figure pouvant bien entendu servir à mieux définir l'invention le cas échéant.

### DESCRIPTION DETAILLEE DE L'INVENTION

En référence à la figure 1, l'invention consiste en un insert de rigidification 1, en particulier métallique, apte à verrouiller la rotation du pied avant 2 du longeron intérieur avant 3 lors d'un choc frontal.

L'insert de rigidification 1 est fixé solidairement au longeron intérieur avant 3, notamment soudé en bas de pied avant 2, de façon à couvrir le coude du longeron intérieur avant 3 dont il épouse en partie la forme. Autrement dit, l'insert de rigidification 1 épouse la forme d'une portion du longeron intérieur avant 3, sur une portion correspondant au coude suivi par ledit longeron intérieur avant 3 à la base du pied avant 2 qui s'étend orthogonalement à la route, suivant un montant de la caisse généralement destiné à recevoir les charnières de portière avant du véhicule. Ainsi, ledit insert de rigidification 1 est fixé audit longeron intérieur avant 3 à la fois sur une portion du longeron intérieur avant 3 située en amont du pied avant 2 et sur une portion du coude du longeron intérieur avant 3.

Le coude du pied avant 2 du longeron intérieur avant 3, qui constitue, dans l'état de l'art, une zone de faiblesse ayant tendance à tourner vers l'intérieur du coude en cas de choc à l'avant du véhicule, portant atteinte à la rigidité de la structure de la caisse, l'insert de rigidification 3 est configuré pour bloquer la rotation susmentionnée du pied avant 2.

Selon un mode de réalisation préféré, pour améliorer la rigidification du pied avant 2, l'insert de rigidification 1 est par ailleurs soudé à la fois sur le fond et sur le mur de l'entrée de porte du longeron intérieur avant 3. Le fond correspond à une surface latérale du longeron intérieur avant 3, s'étendant dans un plan orthogonal à la route. Le mur d'entrée de porte du longeron intérieur avant 3 correspond à une surface du dessus du longeron intérieur avant 3, s'étendant dans un plan parallèle à la route.

L'insert de rigidification 1 assure une augmentation locale de l'épaisseur du longeron intérieur avant 3 couvrant le coude qui amorce le pied avant. Cette augmentation locale d'épaisseur entraîne la rigidification du coude et empêche la rotation du pied avant vers l'intérieur du coude en cas de choc à l'avant du véhicule.

L'insert de rigidification 1 est de préférence une pièce emboutie en métal, intégrée au longeron intérieur avant 3.

L'insert de rigidification 1 selon l'invention présente par ailleurs l'avantage d'être aisément déclinable en variantes de réalisation, dans lesquels la forme, le matériau, l'épaisseur ou encore les dimensions sont adaptés aux performances souhaitées et au modèle de véhicule concerné.

## Revendications

1. Insert de rigidification (1) pour caisse de véhicule, configuré pour épouser la forme d'une portion d'un pied avant (2) formant un coude d'un longeron intérieur avant (3) d'une caisse de véhicule, ledit longeron intérieur avant (3) ayant un axe longitudinal en amont du pied avant (2), ledit coude prolongeant le longeron intérieur avant (3) dans une direction orthogonale à l'axe longitudinal du longeron intérieur avant et orthogonale à la route, ledit insert de rigidification (1) étant destiné à être fixé solidairement audit longeron intérieur avant (3) de façon à recouvrir ledit coude, de sorte à verrouiller toute mobilité dudit longeron intérieur avant (3) en rotation du pied avant (2), sur une portion correspondant audit coude, dans une direction orientée vers l'intérieur du coude, de façon à bloquer la rotation du pied avant (2) en cas de choc à l'avant du véhicule, **caractérisé en ce que** ledit insert de rigidification (1) est fixé audit longeron intérieur avant (3) à la fois sur une portion du fond dudit longeron intérieur avant (3), correspondant à une surface s'étendant latéralement, sur un côté du longeron intérieur avant (3), dans un plan orthogonal à la route, et sur une portion d'un mur d'entrée de porte, correspondant à une surface s'étendant longitudinalement, sur un dessus du longeron intérieur avant (3), dans un plan parallèle à la route.

2. Insert de rigidification (1) selon la revendication 1, dans lequel ledit insert de rigidification (1) est fixé par soudure audit longeron intérieur avant (3).

3. Insert de rigidification selon l'une des revendications précédentes, dans lequel ledit insert de rigidification (1) est fixé audit longeron intérieur avant (3) à la fois sur une portion du longeron intérieur avant (3) située en amont du pied avant (2) et sur une portion du coude du longeron intérieur avant (3).

4. Insert de rigidification (1) selon l'une des revendications précédentes, dans lequel ledit insert de rigidification (1) est une pièce d'un seul tenant.

5. Insert de rigidification (1) selon la revendication précédente, dans lequel ledit insert de rigidification (1) est une pièce unique emboutie.

6. Longeron intérieur avant destiné à une caisse de véhicule automobile, comprenant un insert de rigidification (1) selon l'une des revendications précédentes.

7. Caisse de véhicule automobile comprenant un longeron intérieur avant selon la revendication précédente, de chaque côté de la caisse du véhicule.

8. Véhicule automobile comprenant une caisse selon la revendication précédente.

## Patentansprüche

1. Versteifungseinsatz (1) für eine Fahrzeugkarosserie, der so konfiguriert ist, dass er sich an die Form eines Abschnitts eines vorderen Fußes (2) anpasst, der einen Knick eines vorderen inneren Längsträgers (3) einer Fahrzeugkarosserie bildet, wobei der vordere innere Längsträger (3) eine Längsachse stromaufwärts des vorderen Fußes (2) aufweist, wobei der Knick den vorderen inneren Längsträger (3) in einer Richtung orthogonal zur Längsachse des vorderen inneren Längsträgers und orthogonal zur Straße verlängert, wobei der Versteifungseinsatz (1) so angeordnet ist, dass er fest mit dem vorderen inneren Längsträger (3) verbunden ist Überlappen des Ellbogens, sodass jede Beweglichkeit des vorderen inneren Längsträgers (3) in Drehung mit dem vorderen Fuß (2) an einem Abschnitt, der dem Ellbogen entspricht, in einer Richtung verriegelt wird, die zum Inneren des Ellbogens gerichtet ist, sodass die Drehung des vorderen Fußes (2) im Falle eines Aufpralls an der Front des Fahrzeugs blockiert wird, **dadurch gekennzeichnet, dass** der Versteifungseinsatz (1) an dem vorderen inneren Längsträger (3) gleichzeitig an einem Abschnitt des Bodens des vorderen inneren Längsträgers (3) befestigt ist, der einer sich seitlich erstreckenden Fläche auf einer Seite des vorderen inneren Längsträgers (3) senkrecht zur Straße und auf einem Teil einer Türeingangswand, der einer sich in Längsrichtung erstreckenden Fläche auf einer Oberseite des vorderen inneren Längsträgers (3) in einer zur Straße parallelen Ebene entspricht.

2. Versteifungseinsatz (1) nach Anspruch 1, wobei der Versteifungseinsatz (1) an dem vorderen inneren Längsträger (3) durch Schweißen befestigt ist.

3. Versteifungseinsatz nach einem der vorhergehenden Ansprüche, bei dem der Versteifungseinsatz (1) an dem vorderen inneren Längsträger (3) sowohl an einem Abschnitt des vorderen inneren Längsträgers (3), der stromaufwärts des vorderen Fußes (2) angeordnet ist, als auch an einem Abschnitt des Knicks des vorderen inneren Längsträgers (3) befestigt ist.

4. Versteifungseinsatz (1) nach einem der vorhergehenden Ansprüche, wobei der Versteifungseinsatz (1) ein einstückiges Stück ist.

5. Versteifungseinsatz (1) nach dem vorhergehenden Anspruch, wobei der Versteifungseinsatz (1) ein einziges tiefgezogenes Teil ist.

6. Vorderer Innenlängsträger für einen Kraftfahrzeugaufbau mit einem Versteifungseinsatz (1) nach einem der vorhergehenden Ansprüche.

7. Kraftfahrzeugkarosserie mit einem vorderen Innenlängsträger nach dem vorhergehenden Anspruch auf jeder Seite der Kraftfahrzeugkarosserie.

8. Kraftfahrzeug mit einem Aufbau nach dem vorhergehenden Anspruch.

## Claims

1. Stiffening insert (1) for a vehicle body, configured to follow the shape of a portion of a front foot (2) forming an elbow of a front inner spar (3) of a vehicle body, said front inner spar (3) having a longitudinal axis upstream of the front foot (2), said elbow extending the front inner spar (3) in a management orthogonal to the longitudinal axis of the front inner spar and orthogonal to the road, said stiffening insert (1) being intended to be securely fastened to said front inner spar (3) so as to cover said elbow, so as to lock any mobility of said front inner spar (3) in rotation of the front foot (2), on a portion corresponding to said elbow, in a management orientated towards the inside of the elbow, so as to block the rotation of the front foot (2) in the event of an impact at the front of the vehicle, **characterised in that** said stiffening insert (1) is fixed to said front inner spar (3) both on a portion of the bottom of said front inner spar (3), corresponding to a surface extending laterally, on one side of the front inner spar (3), in a drawing orthogonal to the road, and on a portion of a wall door entrance, corresponding to a surface extending longitudinally, on a top of the front inner spar (3), in a drawing parallel to the road.

2. Stiffening insert (1) according to claim 1, in which said stiffening insert (1) is welded to said front inner spar (3).

3. Stiffening insert according to any one of the previous claims, wherein said stiffening insert (1) is fixed to said front inner spar (3) both on a portion of the front inner spar (3) located upstream to the front foot (2) and on a portion of the elbow of the front inner spar (3).

4. Stiffening insert (1) according to one of the previous claims, wherein said stiffening insert (1) is a one-piece component.

5. Stiffening insert (1) according to the previous claim, wherein said stiffening insert (1) is a single stamped component.

6. Front inner spar intended for a motor vehicle body, comprising a stiffening insert (1) according to one of the previous claims.

7. motor vehicle Body comprising a front inner spar according to the previous claim, on each side of the body of the vehicle.

8. Motor vehicle comprising a body according to the previous claim.
